# EUROPEAN PATENT SPECIFICATION

(11) **EP 1 853 523 B1**
(45) Date of publication and mention of the grant of the patent: **18.07.2012**
(21) Application number: 05818418.5
(22) Date of filing: 22.12.2005
(51) Int. Cl.: C02F 9/08, C02F 1/72

(54) **METHOD FOR GROUND WATER AND WASTEWATER TREATMENT**
VERFAHREN ZUR BEHANDLUNG VON GRUNDWASSER UND ABWASSER
PROCEDE POUR LE TRAITEMENT DE L'EAU SOUTERRAINE ET DES EAUX USEES

(30) Priority: 30.12.2004 AU 2004907353; 14.10.2005 AU 2005905677
(43) Date of publication of application: 14.11.2007
(73) Proprietor: Dewatering Filtration Technology Services Pty Ltd, Dunsborough WA (AU)
(72) Inventor: DUTA, Gheorge, Emil, Kallaroo, W.A. 6025 (AU)
(74) Representative: Rupprecht, Kay
(86) International application number: PCT/AU2005/001972
(87) International publication number: WO 2006/069418

(56) References cited:
- WO-A-97/46331
- WO-A-2004/085319
- AU-A1- 2003 200 855
- NL-C2- 1 000 631
- DATABASE WPI Week 200140, Derwent Publications Ltd., London, GB; Class D15, AN 2001-378161, XP008113560 & JP 2001 113291 A (KURITA WATER IND LTD) 24 April 2001

## Description

### FIELD OF THE INVENTION

The invention relates to a method of water treatment, particularly ground water treatment, to produce water to be used as drinking water, irrigation water and for other purposes for which treated ground water is generally used. The method can be also applied to wastewater treatment, such as from industrial and mineral processing, to be recycled or for its safe discharge into the environment. The treatment system is essentially based on a pressurised fluid circuit minimizing the volume of water under processing and the volume of resulting solid waste. Removal of contaminant and oxidation is applied in progressive steps minimizing or eliminating the need for injection of powerful oxidants and, through this approach, minimizing the cost of treatment. The method is less dependent on various energy sources without excluding their usage. Water treatment equipment for implementing the method is also described.

### BACKGROUND ART

Traditional water treatment systems use ponds, tanks, reactors and filters in a multistage treatment of water, in which non-pressurised stages of water treatment are a major part. Such water treatment systems have many shortcomings: total process time is very long which could be a major issue when treating bore water used as drinking water, they occupy a large area of land, significant amount of water is lost through evaporation instead of being reused, odour control of ponds and open tanks frequently fails and bad smell reaches inhabited areas, large volume of untreated water or in various stages of treatment is present in the system and poses a threat to the environment in case of leakage into ground, spills or flooding.

Many environmental disasters were caused in the past by leakage and spills of contaminated process water and wastewater. The use of such less safe system is a consequence of cost pressure. However, we are finding out that the long-term cost of contamination could be very large and environmental protection authorities are becoming stricter by the day in safety standards, quality of water to be discharged and penalties in case of non-compliance and accidents.

Difficulties are experienced in the area of industrial cleaning and in general when the generation of contaminated water is temporary or the volume of water is not very large. An example is maintenance cleaning of ships. The content and type of contamination is very complex and vary from case to case. Traditional water treatment systems have serious difficulties copping with required treatment due to both complexity of the process and the large size of traditional process equipment. There are high cost associated with storing the water, transporting the water for onshore treatment, cost of onshore treatment and delays of the ships resulting from the operation. It is no surprise that often the cleaning water is discharged into the ocean without properly meeting safe environmental standards or in worst case totally untreated.

Treatment of ground water to be used as drinking water and for irrigation poses a first problem similar to waste water and that is complexity. The complexity in the case of ground water treatment is primarily due to large variance in the ground water analysis. Water from bores only a few hundred meters away could be very different. Often water from the same bore has large seasonal variations in composition. Thus, a process treatment that works initially for one bore may not work satisfactorily in the future or for another bore only a short distance away.

Porous minerals: phosphates, silicates and aluminium-silicates are employed with success in many cases in the removal of iron and manganese. These minerals, natural or synthetic, act in conjunction with an oxidant. Examples of oxidants used are potassium permanganate and sodium hypochlorite. Nonetheless, many systems fail to deliver the necessary performance by not addressing at the level of overall treatment process the problem of water analysis variance. Commonly, the variance comes from concentration of iron and manganese, presence of other elements and compounds and variance in acidity.

Photo catalytic treatment using sunlight needs long time exposure and large area exposed to light. Ultra violet radiation treatment and photo catalytic oxidation is limited by turbidity when present, time of exposure and cost.

Using ozone in any form of treatment is expensive. Total process time could be unacceptably long when using ozone alone for oxidation. Ozone has also poor stability and could not be effectively used alone in water treatment system based on catalytic oxidation. Ozone, may be successfully used as final oxidant and if other oxidants are not suitable or effective.

Customary bore water treatment for agricultural irrigation has very relaxed standards most probably due to limited access to information and assistance with scientific services. Although the world has valuable knowledge that indicates ideal water and soil condition for a particular type of crop very little is done to treat the ground water from economical perspective. Plants are living things and dubious water quality for irrigation makes them less resistant to diseases and reduces their development. Still there are recommendations that bore water with up to 7 mg/l of iron could be used for irrigation of fruit tree plantations if the water is sprinkled on the trunk of the trees, not on the leaves. Accumulation of iron in soil affects the balance of nutrients available to the plants. Primarily, iron accumulation reduces the availability of phosphates locking them as iron phosphate. In some cases more than three times the normal amount of fertilizer needs to be used because the presence of excessive iron amount. Increasing the amount of phosphates reduces the availability of potassium fertilizers. There is a domino effect on the availability of other elements. From an economic perspective the result is higher cost of fertilizers, and in long term, soil deterioration.

When water with high iron content is sprayed onto the leaves of the plants there is an important reduction in the photosynthesis due to formation of slime and blockage of the pores in the leaves.

Imbalance of nutrients in the soil and contamination of the leaves lead to sensitivity of the plants to diseases and reduce the production level of crops.

Another problem in irrigation systems is the blockage of pipes and sprinklers made worse by the frequent presence of iron bacteria.

Iron causes reddish-brown staining of laundry, ceramics and household water fittings. Manganese causes brown-black stains. The stains of iron and manganese are difficult to remove. Detergents do not remove such stains and oxidants such as chlorine bleach may intensify the stains. Although excess of iron in drinking water is not considered harmful, excessive iron affects the balance of other metals and compounds in our bodies and in long term could lead to health problems.

Document WO 2004/085319 A1 discloses to use apparatus, methods or systems, e.g. fine pore diffusers, to saturate ground water with a gas, preferably oxygen, but also possible methane, air, inert or noble gases and/or carbon dioxide. The pore diffusers can be in a ring of aeration injection wells in a large concentric ring around the production well. By increasing the dissolved oxygen level in the ground water, undesirable constituents such as iron or arsenic are lowered in concentration. Methods can be employed to optimize the ground water treatment by injection of other substances, such as iron, as well as predict, model, design, monitor and maintain the treatment process. Although this apparatus and method is overcoming some of the before-mentioned drawbacks, it is not providing a sufficiently satisfying solution for water treatment.

### STATEMENT OF INVENTION

In accordance with one embodiment of the invention, there is provided a method of water treatment comprising the steps of:
a) stripping water of dissolved gas by an inert gas;
b) subjecting water to oxidation treatment to precipitate metals; and
c) removing precipitates from water
wherein oxidation treatment is a multi-stage oxidation treatment including the stages of:
(1) contacting water with oxidant under pressure to precipitate metals from water; and
(2) catalytic oxidation of water with oxidant, oxidation being catalysed by a catalyst, such as a zeolite catalyst, in a catalytic reactor such as a bed reactor, column reactor or filter.

The treatment process may involve static pressure of the water treatment system for pressurising oxidant in stage (1) of oxidation treatment to increase the dissolved oxygen content of the water. Stages (1) and (2) may involve a plurality of reactors.

Removal of precipitates may be performed intermediate stages (1) and (2) of oxidation treatment using a suitable solid/liquids separator such as an inclined plate separator or cyclone. In such case, an oxidant, which may be more powerful than sodium hypochlorite, may also be injected in an intermediate oxidation stage before catalytic oxidation stage (2). Chlorine may be used as oxidant. The oxidant nature may require to be varied in accordance with the metals dissolved in water. Manganese removal may require a more powerful oxidant than employed for iron removal. In another embodiment of the invention, catalytic oxidation stage (2) could be conducted in a bed reactor packed with granular media such as sand or other media. Zeolite catalysts could be substituted to catalyse oxidation dependent on the analysis of metals present in the water. Metal precipitates may act catalytically.

Iron and manganese in underground water, bore water or aquifer water, are generally present as dissolved bicarbonates Fe(HCO₃)₂ and Mn(HCO₃)₂ respectively. Manganese may appear in particularly excessive amounts in water, such as surface or river water, when rains come after a period of drought, for example. Chemical reactions will be shown for iron but similar reaction schemes apply to manganese and other metals. At normal pressure, the ferrous bicarbonate changes to ferrous hydroxide releasing carbon dioxide.

Fe(HCO₃)₂ → Fe(OH)₂ + 2CO₂

The ferrous hydroxide is still soluble. In the presence of dissolved oxygen the ferrous hydroxide changes to ferric hydroxide and precipitates.

4Fe(OH)₂ + O₂ + H₂O → 4Fe(OH)₃

Iron bacteria forms in water wells having a very small amount of iron. The threshold level is around 0.1 mg/litre. Optimum range of dissolved oxygen level for formation of iron bacteria is 0.5 to 4 mg/litre. These conditions are met by most water wells. Besides the direct problems of restricting the water flow through the deposits formed, iron bacteria favour the development of sulphate reducing bacteria. Sulphate reducing bacteria produces hydrogen sulphide with its very unpleasant odour. Other gases that could be present in ground water, such as bore water, and which are not desirable are volatile organic compounds, ammonia and radon.

The water treatment method of the present invention involves, as a first step removing or stripping the gases and volatile organic compounds (if present), from the water before adding air or oxygen for oxidation. The first treatment step, which may be conducted in stages, is aimed at preventing growth of iron bacteria in the treatment system, and iron precipitation at a point in the system where it is not preferred to happen making a gas stripping process, using nitrogen or other inert or non-oxidising gases, more effective. A mixture of carbon dioxide and nitrogen has also very good stripping properties and carbon dioxide is already present as a by-product of ferrous or manganous bicarbonate conversion to ferrous or manganous hydroxide. Bore water is conveniently pumped into a degassing container or tank desirably operated in countercurrent mode where water moves in one direction, principally downwards exiting at the bottom side of the container and nitrogen or other inert gas travels in the opposite that is upwards, direction. The container is provided with a cover with limited opening so that the atmosphere above the surface of the water in the container is formed almost 100% of nitrogen and carbon dioxide. This first principle employed is Henry's Law, which states that the concentration of a solute gas in a solution is directly proportional to the partial pressure of that gas above the solution. Adjusting the rate of nitrogen injection, the concentration of other gases can be diluted to the desired level.

The process may also include a flotation step based, for example, on nitrogen injection. Air flotation would have the disadvantage of oxygen being consumed out of the air bubbles, precipitating part of the iron and interfering with the process. The source of nitrogen can be as simple as a nitrogen generator, membrane separator type. Compressed air needed for nitrogen generation could be also used for actuation of valves and the reject part can be further processed and stored as oxygen source. Nitrogen sparging of the water results in gas stripping of volatile organic compounds. Such contaminants may therefore be removed without a dedicated oxidation step. The presence of carbon dioxide although not necessary, contributes to the gas stripping effect. A further enhancement of the method of degassing while keeping the iron in solution is to flush the well with nitrogen maintaining the area of the well above water level under slight positive pressure using nitrogen. The pressure could be as low as 10 kPa, which would decrease the water level in the well by one metre. There is no subsequent energy loss in the hydraulic pumping system because the pump suction would be pressurised by the same amount relative to atmospheric pressure. According to Henry's Law, the nitrogen will diffuse in the water and even if the oxygen is present in the water in the aquifer at significant level a gradient of decreased oxygen concentration towards the bore will be formed, nitrogen taking its place. The slight pressure further helps to keep the iron in solution inside the bore area. At the same time without oxygen, iron will not oxidise and precipitate and iron bacteria cannot develop.

In a small capacity plant, it may be advantageous to combine pressurised air oxidation (or oxygen oxidation) and gas stripping in a single column reactor. Air would be introduced in the lower part of the reactor and raw water in the upper portion. Part of the air dissolves, participating in oxidation at the point of introduction of gas and downstream in the process. Air bubbles travelling upwards participate in the first stage of oxidation, oxygen content of the gas bubbles falling in the process and enrichening in nitrogen. By the time gas reaches an upper portion of the reactor, where incoming or raw water for treatment is introduced, the gas is essentially inert and available for stripping of dissolved gases from the incoming raw water. The contact time of air bubbles with water, as required for oxidation, varies with pH and is reduced by the presence of compounds with a high demand for oxygen. An example of such a compound is hydrogen sulphide.

After gas stripping, and possibly flotation using nitrogen, the next stage of treatment is pressurised oxidation treatment with air, oxygen or oxygen enriched air. The pressurised oxidation reactor is advantageously placed first in line after the pump so that the static pressure in the reactor is the highest in the system. This is because the solubility of gases in liquid increase with pressure. High level of dissolved oxygen increases the effectiveness of the next step of oxidation and reduces the amount of oxidant injection for catalytic oxidation. The degassing step of the process produces more predictable and stable water quality because large but fluctuating in concentration, high oxygen demanding compounds, such as ammonia and hydrogen sulphide, are removed. Oxygen injection in the pressurized reactor reduces the iron to a few milligrams per litre in a short time. The oxygen injection is counter vertical current. Sensing the oxygen content, for example in the automatic gas release at the top of the pressurized reactor, could be used for the control of oxygen injection rate. Regardless of the fluctuating level of iron in the raw water, the water exiting the oxidation reactor can be controlled to have precise level of iron preferably not more than 5 mg/litre. For some water treatment applications this might be the last level of oxidation treatment needed. Nonetheless, most water treatment plants aiming at advanced removal of iron and manganese fail due to the fact that the part of the treatment process to produce the removal of final small concentration of iron and manganese, receives unpredictable fluctuating level of iron, manganese and other oxygen demanding compounds. Following the process of the invention, catalytic oxidation is expected to be effective. In filters based on zeolite filter media for catalytic oxidation involving injection of oxidant, iron and manganese will oxidise and precipitate encouraging coprecipitation of elements with similar electro negativity. Such elements are: copper, lead, cadmium, chromium, cobalt, nickel, zinc and arsenic. Other filter media may be employed provided that they have catalytic effect. Conveniently, oxidants to be injected are the oxidants with better stability in aqueous solution: sodium hypochlorite, potassium permanganate and chlorine dioxide. However, use of other oxidants and mixtures of oxidants is possible. Post-catalytic oxidation or other treatment stages may be employed. For example ozone may be injected; for example a small amount of ozone may be injected downstream of the filter having, among other properties, biocidal effects. Oxidant nature and addition method may vary with the standard of the water quality that needs to be achieved and the subsequent usage of the treated water. To this end, a post catalytic treatment may employ reverse osmosis or other treatment steps to polish water quality to required drinking or usage standards. Reverse osmosis may be employed to reduce salt content where salinity of raw water is high. The water treatment method of the present invention may form part of, or a module of, a broader treatment process to deal with complex contamination. While iron and manganese are the focus in treatment of ground water in accordance with the invention, modules may be incorporated to deal with other contaminants such as hydrocarbons which may leak into aquifers from petrol stations, petrol tanks or other sources. Fertiliser and nutrient leachates, as well as high salinity, may be addressed by further treatment stages involving precipitation, reverse osmosis and so on. Biological treatment is most effective in treatment of water contaminated with sewage or perhaps other organic contaminants. In such case, biological treatment could be incorporated in the water treatment method.

In accordance with the process of the invention, a shorter total time of treatment process at lower cost than traditional systems while using a process treatment plant that could easily adjust to large variations in water analysis may be achieved. The process may be performed at ambient temperatures. At the same time, in the case of bore water treatment, iron precipitation in the well and formation of iron bacteria is desirably avoided. Formation of iron bacteria slime has serious consequences to the productivity of the water well and maintenance cost of the water well.

### BRIEF DESCRIPTION OF THE DRAWINGS

The following description of the preferred embodiment of the present invention gives in depth understanding of the concept.
Figure 1 is a process flow diagram of a bore water treatment system for medium to large flow rate capacity in accordance with the embodiment of the invention.
Figure 2 is a process flow diagram of a bore water treatment system for small flow rate capacity in accordance with a second embodiment of the invention.
Figure 3 is part of a process flow diagram of a borewater treatment system showing a section of the process in accordance with a third embodiment of the invention.
Figure 4 is part of a process flow diagram of a borewater treatment system showing a section of the process in accordance with a fourth embodiment of the invention.

### DETAILED DESCRIPTION OF PREFERRED EMBODIMENTS OF THE INVENTION

The key components of a water treatment system made in accordance with the present invention are the degassing unit using an inert gas such as nitrogen to perform degassing and flotation without oxidation, the pre-catalytic oxidation reactor reducing the oxygen demand for the catalytic stage and reducing the variation in concentration of oxygen demanding compounds, the catalytic oxidation filters, the gas preparation and injection system, and the supervisory control system. It is the inert gas degassing and inert atmosphere protection of the well and their combination with oxidation in progressive steps more effectively using the oxidants that represent a significant departure from conventional design. It is understood that all embodiments of the present invention described herein could be integrated in broader water treatment system that may vary depending on the final usage or application of product treatment of water.

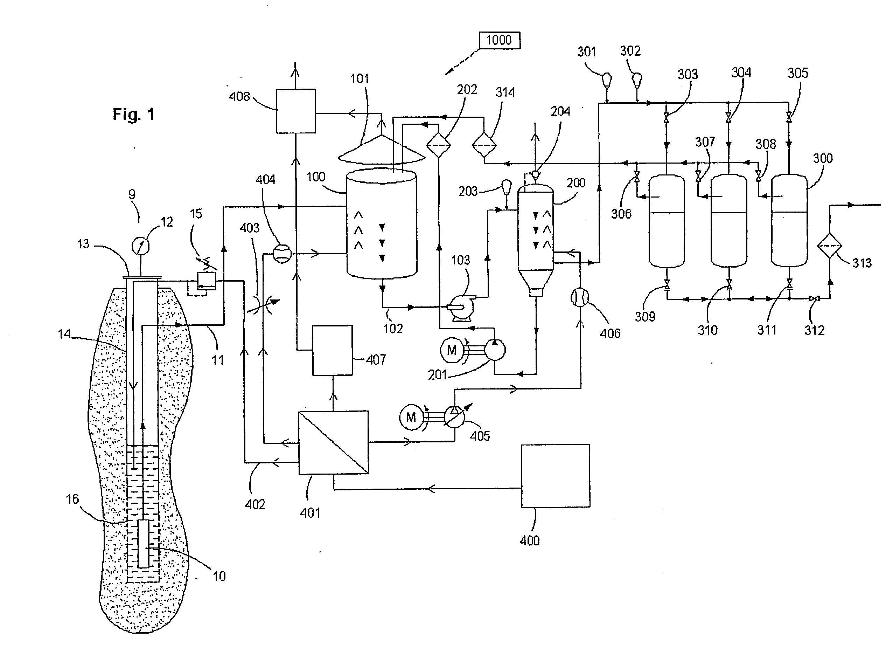

In Figure 1, is shown a water well 9 which has a casing 14 of a material that amongst customary properties for such application has low permeability to gas. Well 9 has a well clover 13 of suitable material also with low permeability to gasses and provided with adequate fasteners and seals so that the well is sealed and a slight positive pressure could be maintained inside the well. The well cover 13 may be conveniently provided with a pressure gauge for visually checking the presence of pressure. More instrumentation could be added, in a particular application, if deemed appropriate and cost is acceptable. For example, a pressure sensor could monitor the pressure in the well and transmit the pressure signal to the electronic control unit 1000. Furthermore, an oxygen sensor could be installed to detect the oxygen level in the well and transmit the signal to the electronic control unit 1000. Many variants of instrumentation and control are possible but they serve the purpose of preventing the penetration of oxygen in the well and trigger some sort of alarm if this happens and such variants of instrumentation and control are considered to be within the scope of the present invention. The compressed air supply 400 provides compressed air for the nitrogen and oxygen generator unit 401 and could also provides compressed air for an intermediate oxidation stage using air and for actuation of valves. Nitrogen from the nitrogen and oxygen generator unit 401 is supplied through piping 402 and pressure reducing valve 15 to the well, preferably the piping terminates underneath the water level in the well. Terminating the nitrogen supply pipe underneath the water level helps purging out the oxygen at the installation stage and in all cases when oxygen has penetrated inside the well. Oxygen is heavier than nitrogen and for flushing out the oxygen the volume of nitrogen required is about four times the volume of the well above water level. After flushing out the well with nitrogen, only a small amount of nitrogen is consumed. The nitrogen from above the water dissolves into the water and diffuses further into the aquifer in the vicinity of the pump through the well screen 16. The lack of oxygen prevents formation of iron bacteria and corrosion of the equipment in the well. Absence of oxygen and presence of pressure maintains the iron in solution. Thus, blockage of the well by iron bacteria slime and iron precipitation is eliminated. Another advantage is that if other undesirable gasses are present in the aquifer their concentration in the well and in its proximity will be reduced by the nitrogen. The reducing valve 15 is adjustable and maintains the set gas pressure in the well. Raw water from the well is pumped by the well pump 10 through line 11 into the degassing tank 100 provided with cover 101 of such construction so that while gasses are allowed to escape, oxygen from air is restricted from entering the degassing tank 100. The entry of the raw water into the degassing tank 100 could be tangential to cause spinning of the water or an array of nozzles could be installed above controlled water level. Nitrogen is injected through diffusers placed close to the bottom of the degassing tank. The flow of nitrogen is monitored by the flowmeter 404 and set by the flow control valve 403, optionally in accordance with chemical analysis of raw water. Other variants of instrumentation and control for nitrogen injection are possible and they are considered to be within the scope of the present invention. Flow of nitrogen and water in degassing tank 100 is counter-current. The bubbles of nitrogen travel upwards through the water and the water moves downwards transported by the pump 103. Gases, such as radon, hydrogen sulphide, ammonia, volatile organic compounds and carbon dioxide are eliminated through nitrogen flushing and stripping. Carbon dioxide also participates effectively to stripping in particular volatile organic compounds. In case the concentration of gasses causes unpleasant odour in the surroundings or other problems then part of the oxygen could be used for producing ozone in the ozone generator 407 and the gasses could be oxidised and stripped in the scrubber 408. In most bore water treatment applications the ozone generator 407 and the scrubber 408 are not needed. If present in large amount, solid materials floated to the surface in the degassing tank, in a flotation process, could be skimmed and directed to a secondary filtration and treatment system. Suction line 102 at the bottom of the degassing tank 100 connects to pump 103, which is the main service pump for oxidation and filtration sections of the water treatment system. Centrifugal pump 103 is preferably driven through a frequency inverter. Before water enters the pre-catalytic oxidation reactor 200, dosing system 203 injects a flocculant into the water to help coagulate suspended solids and insoluble compounds generated through oxidation. The flocculant could be a simple compound or a mixture and its nature may very with the chemical content of the raw water and the use of treated water.

In the case of removal of highly toxic metals and metalloids, use of flocculant may be avoided such that the amount of contaminant to be disposed of is kept to a minimum. It is understood that metal hydroxide sludge may not be compacted quickly and a larger volume may have to be filtered through filter 202 than when using flocculant. Nonetheless, the amount of dewatered filter cake produced by filter 202 will be smaller and of less contaminant complexity than when using a flocculant.

Pre-catalytic oxidation reactor 200 is a pressurised container provided at the top with an automatic gas discharge valve 204 and close to the bottom area with oxygen injection system. The oxygen may be pumped using a variable flow compressor 405 and the flow of oxygen may be monitored by flowmeter 406. An oxygen sensor may be installed to measure the oxygen level in the gas exiting through valve 204. Because the reactor is first in line after the pump the static pressure in the pre-catalytic oxidation reactor is relatively high. The amount of dissolved gas in a liquid increases with pressure. Also the amount of oxygen in a particular size of bubble travelling through water upwards is also larger than at ambient pressure. Consequently, intense oxidation could be produced in a relatively small size reactor. The large amount of dissolved oxygen will reduce the amount of oxidant needed for catalytic oxidation in stage (2). The high level of dissolved oxygen ensures better stability of the process in the catalytic phase by oxidising compounds that would otherwise put a strain on the demand of oxidant injection for the catalytic stage and would make the process control difficult and complex. Pump 201 transports the sludge from the bottom of pre-catalytic oxidation reactor through to pressurized filter unit 202. The filter unit 202 could consist of two filters in parallel using cloth bags or mesh containers for retaining the solids. One filter is in service at a time. When the pressure drop across the filter reaches a set level the sludge is directed through the other filter. The bag from the filter previously in service is then removed and cleaned or replaced. Filtered water from filter 202 is returned to degassing unit 100 or may be returned to the pre-catalytic oxidation reactor 200. This depends whether flotation is also performed in the degassing tank 100. If flotation is not performed in the degassing tank 100, then the water should not be returned to the degassing tank 100. The pump 201 is of positive displacement type and the preferred type is progressive cavity pump. Water leaving the pre-catalytic oxidation reactor is conditioned for acidity adjustment if needed. The dosing unit 301 injects an acid or a base as needed for pH control. In the cases of highly acidic water, pH compensation is started early in the process to protect process equipment from corrosion and promote equilibrium of the neutralisation reaction. At a lower level of acidity, dosing unit 301 could be placed on the suction line of pump 103. The dosing unit 302 injects oxidant for the catalytic stage. The oxidant injected is an oxidant stronger than oxygen. It could be sodium hypochlorite or other oxidant or a mixture of oxidants depending on the raw water analysis and the use of treated water. Commonly used will be sodium hypochlorite because its low cost, unless there are other limitations concerning the by-products of the process and the amount of residual chlorine. One or more filters 300, functioning as catalytic oxidation reactors, are filled approximately half of their height with zeolite catalytic filter media, which has the role to facilitate further oxidation of metals and other elements, and compounds that did not oxidise in the previous stage. In the case of bore water, the most important elements remaining to be oxidised at this stage are part of the iron, manganese and arsenic. The inlet of each filter is provided with an isolation valve 303, 304 and 305. The outlet of each filter is provided with an isolation valve 309, 310 and 311. In addition an isolation valve 312 separates the bank of catalytic filters from the downstream part of the system. Isolation valves 306, 307 and 308 are also provided on the backwash outlets. If there is no downstream filter 313 then, in most cases, valves have to be set up to provide a special rinse mode not shown in Figure 1. The operating modes for the filters 300 are service mode and backwash mode. In service mode, the water travels downwards through the bed of zeolite material. Most of the iron will be oxidised in the upper section of the filter 300 bed. Other material and reduction in residual concentration of each element or compound decreases while the water travels through the bed of zeolite. At the same time the bed of zeolite acts as mechanical filter media for sediments and precipitates similar to silica sand. The role of filter 313 is to retain zeolite particles that might escape the filters and it could serve further filtration purposes though, the zeolite being insufficiently fine, bacteria are unlikely to be retained. Often, if the treated water is used as drinking water, the filter 313 may be an activated carbon filter. During service mode inlet valves 303, 304 and 305 and outlet valves 309, 310 and 311 are open. Valve 312 is also open. Valves 306, 307 and 308 on backwash outlets are closed. As the solid sediments or precipitates accumulate, the pressure drop in the filters increases and at a determined pressure drop the filters have to be backwashed to remove the precipitates. For backwashing, the filters are backwashed one at a time typically at a water speed through the filter, double than the service speed. If there are three filters in operation then two filters will operate in service mode and one filter will be backwashed with the water from the other two. During backwash, valve 312 is closed. The valves on the backwash lines of the filters operating in service mode are closed. The filter in backwash operating mode has the inlet valve closed, the outlet valve open and the backwash outlet valve open. Thus water from the other two filters is directed upwards through the filter bed of the backwashed filter and the sediments are removed. Filter 314 for filtering the backwash water could be similar to filter 202.

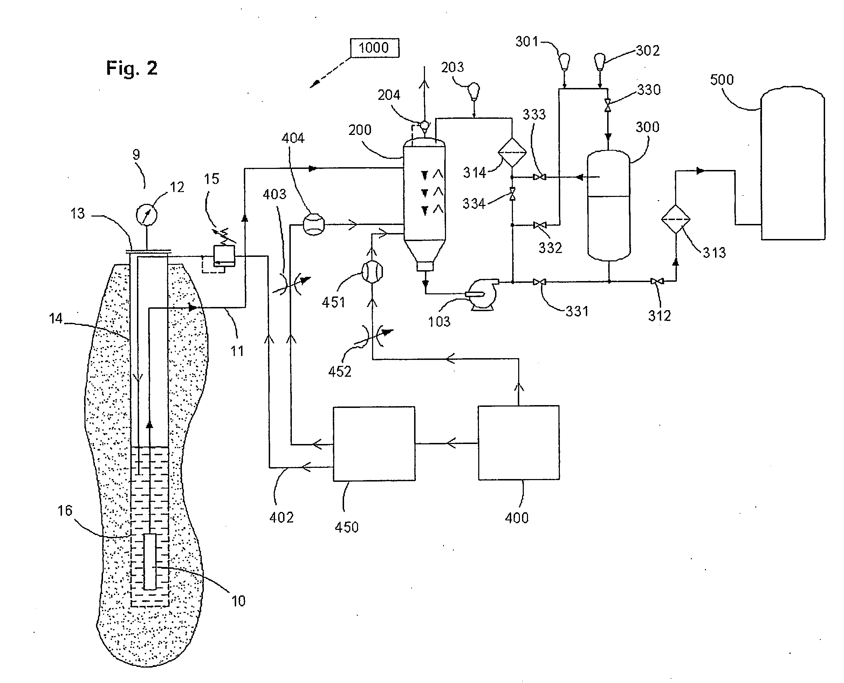

Referring to Figure 2, there is shown the process diagram of a bore water treatment system for smaller capacity where the investment in capital equipment may be more restrictive than for large capacity systems. Water well 9 has the same features as in the embodiment in Figure 1 previously described. The gas generator for degassing and oxidation is simplified from previous embodiment. Only nitrogen is generated for degassing, without generating oxygen and ozone. Thus, the compressed air supply 400, provides compressed air for the nitrogen generator unit 450, for an intermediate oxidation stage using air and for actuation of valves. The simplified water treatment system is essentially operated in batch mode. The pre-catalytic oxidation reactor 200 could be first flushed with nitrogen then filled with water from water well 9 while nitrogen continues to be injected. When the pre-catalytic oxidation reactor is full with water, the water supply is stopped and the water from the pre-catalytic oxidation reactor 200 is circulated through the pump 103, open valve 334 and filter 314 in closed loop. Valves 331, 332 and 333 are closed. The dosing unit 203 injects a small amount of flocculant to aid the filtration of suspended solids present in the raw water. Filtration unit 314 could have a dedicated filter for this treatment stage. In the next treatment stage compressed air is injected into the pre-catalytic oxidation reactor 200 and the pump 103 circulates the water for a limited time. The water may be filtered through a different filter part of filtration unit 314. After allowing an initial time for oxidation, flocculant is injected by the dosing unit 203. The water circulation may be interrupted while compressed air injection could continue. Finally, circulation has to start again for removal of oxidised solid matter and the pre-catalytic oxidation treatment of the batch of water is completed. For the catalytic oxidation stage, the valves 331 and 334 are closed so that the water from the pump 103 is directed to the inlet of the filter 300. Valve 330 is open while the backwash outlet valve is closed. Dosing unit 301 injects compound for acidity correction if necessary and dosing unit 302 injects the oxidant, such as sodium hypochlorite, for catalytic oxidation. Water travels through the bed of zeolite in the filter, then through open valve 312, final filter 313 and is stored in the pressure tank 500. For backwashing cycle of the filter 300 it is not absolutely necessary to use clean water. Clean, fully treated water may be used for a short rinse cycle not shown implemented in Figure 2. In preparation for backwashing the water in the pre-catalytic oxidation reactor may be treated with oxygen for longer duration. When backwashing valves, 330, 312, 332 and 334 are closed and valves 331 and 333 are open. Water from pump 103 is directed through open valve 331 to the bottom of the filter and travels upwards through the bed of zeolite in the filter. The water entrains the sediments and exits through valve 333. Then the backwash water passes through filter unit 314 and is returned to reactor 200 circulating in closed loop. During backwashing, a small amount of air may be injected to aid the removal of the sediment in the catalytic filter 300.

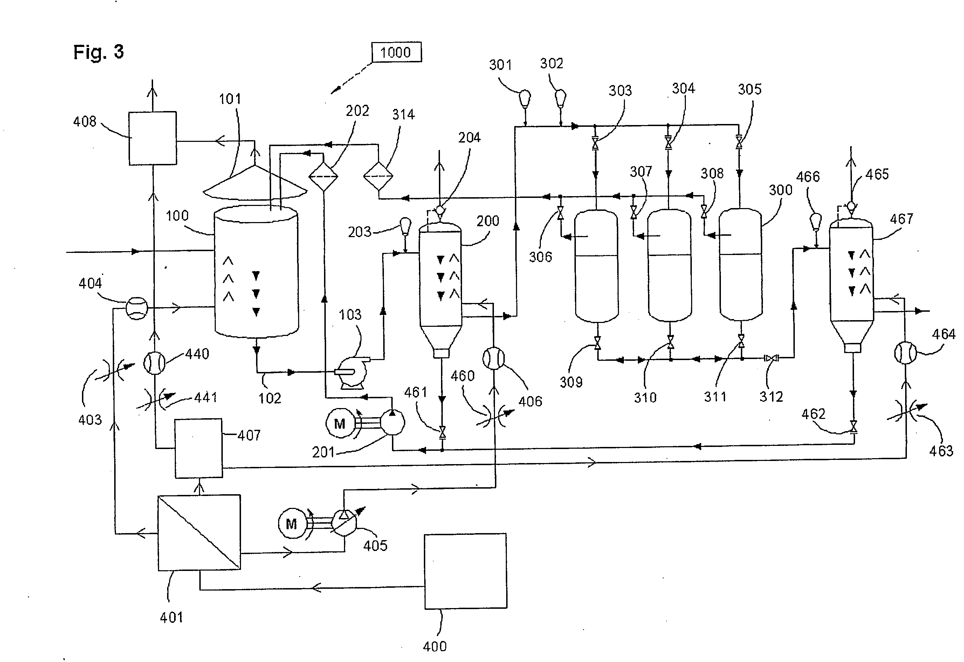

Referring now to Figure 3, there is schematically shown the same method of contaminant removal and oxidation in progressive steps applied to treatment of bore water with very complex contamination or wastewater treatment as part of, or a module of, the treatment process. The key step for removing the metals from waster water in the embodiment according to the schematic in Figure 3 is catalytic oxidation and co-precipitation using zeolite filter media by difference from traditional ways such as selective chemical precipitation, ozone flotation and oxidation and precipitation of metals by increase in pH. Co-precipitation may itself exert a catalytic effect on the process as precipitate metal hydroxides retained in the bed of zeolite (or other media such as sand) have catalytic oxidation effect upon metals in solution. The difference from the process shown in Figure 1 is that there is no water well section and a post catalytic oxidation reactor is added although it might not be always necessary. Also, highly contaminated wastewater is often processed in batch mode rather than continuously. The wastewater enters the degassing tank 100 towards the top side of the container. Degassing is performed using nitrogen and exhaust gases may be treated for eliminating odour and toxicity in scrubber 408. The process follows exactly the same steps of bore water treatment to the point where the water exits the catalytic filters. Then a further treatment steps is implemented mainly for reducing the content of non-metallic mineral contaminants. The post catalytic oxidation reactor 467 is of similar construction to pre-catalytic oxidation reactor 200. The essential difference is that the post-catalytic oxidation reactor uses ozone instead of oxygen for treatment of the water. Dosing unit 466 injects flocculant in the water entering the post-catalytic oxidation reactor. It is possible to operate the entire section of the process in a batch mode closing the output of reactor 467 to downstream treatment and transferring the water back to degassing unit through open valve 462, pump 201 and filter unit 202. The flow of ozone from the generator 407 to reactor 467 is controlled by valve 463 and monitored by flowmeter 464. Backwashing of filters and all other processes are the same as described for the embodiment shown in Figure 1. The embodiment and method of treatment of wastewater shown in Figure 3 achieves in particular the most cost effective treatment of highly contaminated water with contamination levels exceeding the limits accepted for biological treatment.

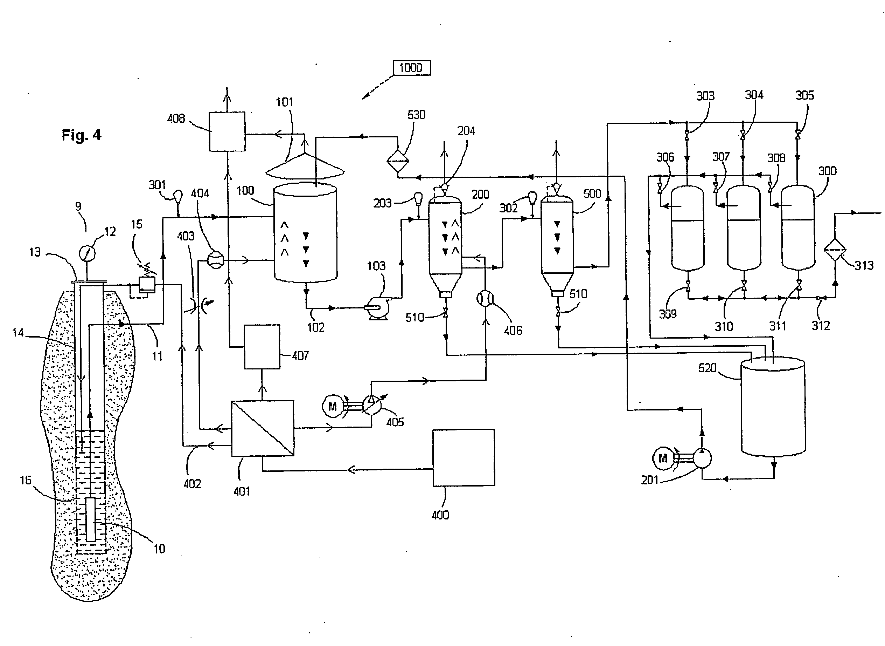

Figure 4 shows an alternative embodiment of water treatment process to that shown in Figure 3 where a separator 500 is employed intermediate pre-catalytic oxidation reactor 200 and catalytic filters 300 to remove precipitates. This may reduce backwash frequency and water usage. The separator 500 may involve one or a number of separators, which may be inclined plate separators, cyclones or otherwise. An inclined plate separator is preferably employed. Container 520 collects backwash and sludge. Filter 530 may be used for solids removal. Inclusion of separator 500 allows a further or intermediate oxidation stage to be included in the process before filters 300. In such case, an oxidant more powerful than sodium hypochlorite may be injected before filters 300.

Where arsenic containing water was treated in accordance with the method of the invention, arsenic levels were reduced to below a detectable limit. Advantageously, the method may be used for arsenic removal from groundwater.

Skilled readers of the present disclosure may make modifications and variations of the method and process diagrams of water treatment of this invention. Such modifications and variations are deemed to be within the scope of the present invention. In particular the instrumentation and control for the implementation of the methods of treatment described herein are not intended to be specifically limited to what has been described. Many variations in the change of instrumentation and control equipment and level of automation are possible. All such variations are within the scope of the present invention unless they introduce new key principles of treatment.

## Claims

1. A method of water treatment comprising the steps of:
a) stripping water of dissolved gas by an inert gas in a degassing stage;
b) subjecting water to oxidation treatment to precipitate metals; and
c) removing precipitates from water
wherein oxidation treatment is multi-stage oxidation treatment comprising the stages of:
(1) contacting water with oxidant under pressure to precipitate metals from water; and
(2) catalytic oxidation of water with'oxidant in a catalytic reactor.

2. The method of claim 1 wherein removal of precipitates is performed intermediate stages (1) and (2) of oxidation treatment.

3. The method of claim 2 wherein an oxidant is injected in an intermediate oxidation stage before catalytic oxidation stage (2).

4. The method of any one of the preceding claims wherein catalytic oxidation stage (2) is conducted in a bed reactor packed with granular media.

5. The method of claim 4 wherein said bed reactor is packed with a zeolite catalyst for catalysing oxidation dependent on the analysis of metals present in raw water supplied for treatment.

6. The method of claim 1 wherein the inert gas is selected from the group consisting of nitrogen, carbon dioxide and mixtures of these gases.

7. The method of claim 6 wherein stripping water of dissolved gas is performed in a degassing container operated in countercurrent mode with water travelling in one direction and inert gas travelling in the opposite direction.

8. The method of claim 6 further including a flotation step.

9. The method of claim 6 wherein the water to be treated is sourced from a well and an area of said well above water level is maintained under slight positive pressure using said inert gas.

10. The method of any one of the preceding claims wherein oxygen is the oxidant for pressurised oxidation stage (1) and oxygen injection rate to a reactor for a pressurised oxidation is controlled as a function of sensed oxygen content at said pressurised oxidation reactor.

11. The method of claim 4 or 5 wherein catalytic oxidation stage (2) is conducted with an oxidant with an oxidant stronger than oxygen.

12. The method of claim 11 wherein said oxidant is selected dependent on analysis of raw water supplied for treatment.

13. The method of claim 12 wherein said oxidant is sodium hypochlorite.

14. The method of any one of the preceding stages further comprising a post-catalytic treatment stage.

15. The method of claim 14 wherein for the post-catalytic treatment stage involves oxidation, preferably with ozone.

16. The method of claim 14 wherein the post-catalytic treatment stage involves reverse osmosis.

17. The method of claim 1 wherein stripping water of dissolved gas by an inert gas and pressure oxidation are conducted in a single reactor or system of reactors.

18. A water treatment system comprising
a) means for stripping water of dissolved gas by an inert gas in a degassing stage;
b) means for subjecting water to oxidation treatment to precipitate metals; and
c) means for removing precipitates from water
wherein the means for subjecting water to oxidation treatment comprises
(1) means for contacting water with oxidant under pressure to precipitate metals from water; and
(2) means for catalytic oxidation of water with oxidant in a catalytic reactor.

## Patentansprüche

1. Verfahren zur Wasseraufbereitung, umfassend die Schritte:
a) Austreiben von gelöstem Gas im Wasser durch ein inertes Gas in einer Entgasungsstufe;
b) Unterziehen von Wasser einer Oxidationsbehandlung zum Ausfällen von
Metallen; und
c) Entfernen von Fällprodukten aus Wasser,
wobei Oxidationsbehandlung eine mehrstufige Oxidationsbehandlung mit den Stufen:
(1) in Kontakt bringen von Wasser mit Oxidationsmittel unter Druck zum Ausfällen von Metallen aus Wasser; und
(2) katalytische Oxidation von Wasser mit Oxidationsmittel in einem katalytischen Reaktor
ist.

2. Verfahren nach Anspruch 1, bei dem eine Entfernung von Fällprodukten in Zwischenstufen (1) und (2) einer Oxidationsbehandlung durchgeführt wird.

3. Verfahren nach Anspruch 2, bei dem ein Oxidationsmittel in einer dazwischen liegenden Oxidationsstufe vor einer katalytischen Oxidationsstufe (2) eingeblasen wird.

4. Verfahren nach einem der vorhergehenden Ansprüche, bei dem eine katalytische Oxidationsstufe (2) in einem mit granulierten Mitteln gefüllten Bettreaktor geführt wird.

5. Verfahren nach Anspruch 4, bei dem der Bettreaktor mit einem ZeolithKatalysator zum Katalysieren einer Oxidation abhängig von der Analyse von Metallen gefüllt ist, die im zur Behandlung zugeführten Rohwasser vorhanden sind.

6. Verfahren nach Anspruch 1, bei dem das inerte Gas von der aus Stickstoff, Kohlendioxid und Mischungen dieser Gase bestehenden Gruppe ausgewählt wird.

7. Verfahren nach Anspruch 6, bei dem das Austreiben von gelöstem Gas im Wasser in einem Entgasungsbehälter durchgeführt wird, der in Gegenstrom-Betriebsweise mit Wasser, das sich in der einen Richtung bewegt, und inertem Gas, das sich in der entgegen gesetzten Richtung bewegt, betrieben wird.

8. Verfahren nach Anspruch 6, des Weiteren umfassend einen Flotationsschritt.

9. Verfahren nach Anspruch 6, bei dem das aufzubereitende Wasser seinen Ursprung von einem Brunnen hat und ein Bereich des Brunnens oberhalb des Wasserspiegels unter leichtem Überdruck gehalten wird, indem das inerte Gas verwendet wird.

10. Verfahren nach einem der vorhergehenden Ansprüche, bei dem Sauerstoff das Oxidationsmittel für eine unter Überdruck gehaltene Oxidationsstufe (1) ist, und der Einblasstrom von Sauerstoff zu einem Reaktor für eine Druckoxidation als eine Funktion von ermitteltem Sauerstoffgehalt in diesem Druckoxidationsreaktor gesteuert wird.

11. Verfahren nach Anspruch 4 oder 5, bei dem die katalytische Oxidationsstufe (2) mit einem Oxidationsmittel geführt wird, mit einem Oxidationsmittel, das stärker als Sauerstoff ist.

12. Verfahren nach Anspruch 11, bei dem das Oxidationsmittel in Abhängigkeit von einer Analyse von Rohwasser, das für die Aufbereitung zugeführt wird, ausgewählt wird.

13. Verfahren nach Anspruch 12, bei dem das Oxidationsmittel Natriumhypochlorit ist.

14. Verfahren nach einer der vorhergehenden Stufen, das des Weiteren eine nachkatalytische Behandlungsstufe umfasst.

15. Verfahren nach Anspruch 14, bei dem die nachkatalytische Behandlungsstufe eine Oxidation vorzugsweise mit Ozon einschließt.

16. Verfahren nach Anspruch 14, bei dem die nachkatalytische Behandlungsstufe Umkehrosmose einschließt.

17. Verfahren nach Anspruch 1, bei dem das Austreiben von gelöstem Gas im Wasser durch ein inertes Gas und Druckoxidation in einem einzelnen Reaktor oder System von Reaktoren geführt wird.

18. Wasseraufbereitungssystem, umfassend
a) Mittel zum Austreiben von gelöstem Gas im Wasser durch ein inertes Gas in einer Entgasungsstufe;
b) Mittel zum Unterziehen von Wasser einer Oxidationsbehandlung zum Ausfällen von Metallen, und
c) Mittel zum Entfernen von Fällprodukten aus Wasser,
wobei die Mittel zum Unterziehen von Wasser einer Oxidationsbehandlung
(1) Mittel, um Wasser mit einem Oxidationsmittel unter Druck zum Ausfällen von Metallen aus Wasser in Kontakt zu bringen; und
(2) Mittel zur katalytischen Oxidation von Wasser mit Oxidationsmittel in einem katalytischen Reaktor
aufweisen.

## Revendications

1. Procédé de traitement d'eau, comprenant les étapes consistant à :
a) débarrasser l'eau des gaz dissous par un gaz inerte dans une étape de dégazage ;
b) soumettre l'eau à un traitement d'oxydation pour faire précipiter les métaux ; et
c) supprimer les précipités hors de l'eau,
dans lequel le traitement d'oxydation est un traitement d'oxydation à plusieurs étapes comprenant les étapes consistant à :
(1) mettre en contact l'eau avec un oxydant sous pression pour faire précipiter les métaux hors de l'eau ; et
(2) effectuer une oxydation catalytique de l'eau avec un oxydant dans un réacteur catalytique.

2. Procédé selon la revendication 1, dans lequel la suppression des précipités est exécutée de manière intermédiaire aux étapes (1) et (2) de traitement d'oxydation.

3. Procédé selon la revendication 2, dans lequel un oxydant est injecté dans une étape d'oxydation intermédiaire avant l'étape d'oxydation catalytique (2).

4. Procédé selon l'une quelconque des revendications précédentes, dans lequel l'étape d'oxydation catalytique (2) est menée dans un réacteur en lit garni d'un média granulé.

5. Procédé selon la revendication 4, dans lequel ledit réacteur en lit est garni d'un catalyseur zéolite pour une catalyse de l'oxydation en dépendance de l'analyse des métaux présents dans l'eau brute fournie pour le traitement.

6. Procédé selon la revendication 1, dans lequel le gaz inerte et choisi parmi le groupe comprenant azote, dioxyde de carbone, et des mélanges de ces gaz.

7. Procédé selon la revendication 6, dans lequel l'étape consistant à débarrasser l'eau des gaz dissous est exécutée dans un conteneur de dégazage qui fonctionne en mode à contre-courant avec de l'eau qui circule dans une direction et un gaz inerte qui circule dans la direction opposée.

8. Procédé selon la revendication 6, incluant en outre une étape de flottation.

9. Procédé selon la revendication 6, dans lequel l'eau à traiter provient d'un puits, et une zone dudit puits au-dessus du niveau d'eau est maintenue sous une légère pression positive en utilisant ledit gaz inerte.

10. Procédé selon l'une quelconque des revendications précédentes, dans lequel l'oxygène est l'oxydant pour l'étape d'oxydation sous pression (1), et le débit d'injection d'oxygène vers un réacteur pour une oxydation sous pression est commandé en fonction de la teneur en oxygène détectée au niveau dudit réacteur d'oxydation sous pression.

11. Procédé selon la revendication 4 ou 5, dans lequel l'étape d'oxydation catalytique (2) est menée avec un oxydant plus fort que l'oxygène.

12. Procédé selon la revendication 11, dans lequel ledit oxydant est choisi en fonction de l'analyse de l'eau brute fournie pour le traitement.

13. Procédé selon la revendication 12, dans lequel ledit oxydant est de l'hypochlorure de sodium.

14. Procédé selon l'une quelconque des revendications précédentes, comprenant en outre une étape de traitement post-catalytique.

15. Procédé selon la revendication 14, dans lequel l'étape de traitement post-catalytique implique une oxydation, de préférence avec de l'ozone.

16. Procédé selon la revendication 14, dans lequel l'étape de traitement post-catalytique implique une osmose inverse.

17. Procédé selon la revendication 1, dans lequel les étapes consistant à débarrasser l'eau des gaz dissous par un gaz inerte et l'oxydation sous pression sont menées dans un réacteur unique ou dans un système de réacteurs.

18. Système de traitement d'eau comprenant
a) des moyens pour débarrasser l'eau des gaz dissous par un gaz inerte dans une étape de dégazage ;
b) des moyens pour soumettre l'eau à un traitement d'oxydation pour faire précipiter les métaux ; et
c) des moyens pour supprimer les précipités hors de l'eau
dans lequel les moyens pour soumettre l'eau à un traitement d'oxydation comprennent
(1) des moyens pour mettre l'eau en contact avec un oxydant sous pression pour faire précipiter les métaux hors de l'eau ; et
(2) des moyens pour une oxydation catalytique de l'eau avec un oxydant dans un réacteur catalytique.
